Europäisches Patentamt

European Patent Office

Office européen des brevets

(11) Publication number: **0 262 973**
A2

(12) # EUROPEAN PATENT APPLICATION

(21) Application number: 87308725.8

(22) Date of filing: 01.10.87

(51) Int. Cl.⁴: **B 29 C 63/48**
B 42 C 11/02, B 32 B 31/20

(30) Priority: 01.10.86 JP 233432/86

(43) Date of publication of application:
06.04.88 Bulletin 88/14

(84) Designated Contracting States: DE FR GB IT NL

(71) Applicant: CANON KABUSHIKI KAISHA
30-2, 3-chome, Shimomaruko
Ohta-ku Tokyo (JP)

(72) Inventor: Kurihara, Hideo
29-15 Matsunoki 3-chome Suginami-ku
Tokyo (JP)

(74) Representative: Beresford, Keith Denis Lewis et al
BERESFORD & Co. 2-5 Warwick Court High Holborn
London WC1R 5DJ (GB)

(54) Protective member covering device for optical recording medium and optical information recording and reading device.

(57) A device for covering a protective member for an optical recording medium comprises cleaning means which cleans at least one surface of an optical recording medium, and a protective member covering means which covers a peelable protective member on at least one surface of the recording medium cleaned with the cleaning means.

FIG.1

**Description**

Protective Member Covering Device for Optical Recording Medium and Optical Information Recording and Reading Device

BACKGROUND OF THE INVENTION

Field of the Invention

This invention relates to a protective member covering device for optical recording medium and an optical information recording and reading device.

Particularly, the present invention relates to a device for covering an optical recording medium with a protective member for the purpose of protecting a portable optical recording medium from breaking, dust attachment and also environmental deterioration and an optical information reading device having a means for covering an optical recording medium with a protective member.

Related Background Art

A portable optical recording medium has been proposed, which can record and read simply a large amount of information necessary for medical office works or monetary transactions.

Also, for performing recording and reading, or recording or reading of information by use of such optical recording medium, an optical information recording and reading device has been developed.

Whereas, in the prior art, an optical recording medium has a recording layer formed wholly or partially on the substrate, and further has a film of a synthetic resin such as polycarbonate or epoxy resin coated on the recording layer (also on the back surface of substrate, if desired) to prevent damage, adhesion of dust, etc.

Recording of information on such optical recording medium is performed by irradiating the recording layer surface with an optical beam (suitably laser beam) corresponding to information signals through the above coating of synthetic resin to give rise to photochemical change or heat melting at the irradiated point, thereby forming dots or pits.

On the other hand, reading information is performed by irradiating the recording layer surface with a light beam for reading (suitably laser beam) through the coating of synthetic resin and detecting the intensity of the reflected light or the transmitted light at the pit (dot) portion and the non-pit (non-dot) portion by a light-receiving element.

Whereas, in the case of the optical recording and reading system, if damage or dust is attached on the recording medium, progress of optical beam is obstructed to inhibit accurate recording or reading, and therefore the recording medium is demanded to have no damage or contamination during recording or reading.

However, if the coating of synthetic resin is thin, there is no effect for preventing damage of the recording medium, while if it is made thicker, flexibility will be lost to become brittle against bending impact, etc. even if damages may be prevented, with the result that harms similar to damages will eventually occur due to formation of large or small cracks on the surface and internally of the coating.

Also, even if attachment of oil droplet or dust onto the recording medium itself may be avoided attachment of oil droplet, fingerprint, dust, etc. onto the film surface of the synthetic resin cannot be avoided, whereby accurate recording and reading are inhibited.

Further, the recording material constituting the recording layer of such recording medium is very susceptible to the influence by temperature or humidity, and is subject to deformation of the shape of pit, etc. under high temperature and high humidity environment to cause erroneous signals. Such harm cannot be cancelled only by the above coating treatment with a synthetic resin.

As another measure for solving the various harms as mentioned above, it may be conceivable to carry an optical recording medium housed in a case.

However, the means for housing in a case may be useful for prevention of breaking, but it cannot be said to be so useful means for prevention of dust attachment.

Further, a case is inconvenient for carrying in a commutation-ticket holder or a purse.

SUMMARY OF THE INVENTION

The present information is intended to solve such drawbacks of the prior art as described above.

More specifically, an object of the present invention is to provide a protective member covering device which covers an optical recording medium with a peelable protective member after cleaning said recording medium, in order to protect the optical recording medium particularly during carrying from various dusts, mechanical shock, environment (temperature, humidity, etc.) and maintain its quality.

Another object of the present invention is to provide an optical information recording and reading device provided with a protective member covering means for covering again the optical recording medium with a peelable protective member after having performed recording or reading of information.

According to a first aspect of the present invention, there is provided a protective member covering device for optical recording medium, comprising a cleaning means which cleans at least one surface of an optical recording medium, and a protective member covering means which covers a peelable protective member on at least one surface of the recording medium cleaned with the cleaning means.

According to another aspect of the present invention, there is provided an optical information recording and reading device, comprising a cleaning means for cleaning at least one surface of an optical recording medium, an optical information recording and reading means for performing optically recording or reading of information and a protective member covering means which covers a peelable protective member on at least one surface of the recording medium cleaned with the cleaning means.

According to a further aspect of the present invention, there is provided an optical recording medium which is an optical recording medium covered with a peelable protective member, characterized in that said protective member is provided with a projected portion for peel-off which is projected from the optical recording member.

## BRIEF DESCRIPTION OF THE DRAWINGS

Fig. 1 illustrates schematically the constitution of the protective member covering device for optical recording medium according to the present invention.

Fig. 2 is a schematic plane view of a portable optical recording medium.

Fig. 3 is a schematic illustration of the optical recording medium covered with a protective member.

Fig. 4 is a schematic illustration of the substrate shaped in tape adhered with a protective member.

Fig. 5 is a schematic illustration of another protective member covering device according to the present invention.

Fig. 6 is a schematic plane view of the optical recording medium covered with a protective member.

Fig. 7 is a schematic side sectional view of the optical recording medium shown in Fig. 6.

Fig. 8 is a schematic illustration of the optical information recording and reading device according to the present invention.

## DESCRIPTION OF THE PREFERRED EMBODIMENTS

In the present invention, the optical information recording and reading means refers to a device (means) for performing recording and/or reading of information by an optical means.

The protective member covering device or means for the optical recording medium as described above is particularly useful when used specifically in the cases as described below.

That is, after use of the optical recording medium (after recording or reading of information), before housing into a commutation-ticket holder, etc., the above recording medium is covered with a peelable protective member by use of the above protective member covering device or means.

Thus, the above recording medium will not be deteriorated in quality and lose cleanness even after carrying for a long term, whereby error occurrence during recording and reading can be prevented.

In the device of the present invention, the protective member to be used must be easily peelable after covering, if desired, without impairing the recorded pit, etc. on the recording medium. For, when recording or reading of information is to be done again, it must be used with the protective member being peeled off.

It may be also conceivable to cover a protective member by applying a commercially available packing device semi-automatically, but there are involved the drawbacks such that goodness or badness in finishing may occur depending on individuals, and also that breaking accident may occur by clumsiness.

Further, even when the recording medium may be sufficiently subjected to washing treatment immediately before covering, dust will be inevitably entrained during covering, unless the cleaning means and the covering means are integrally organically linked together by a conveying means within one device.

Referring now to the drawings, a preferable example of the present invention is to be described.

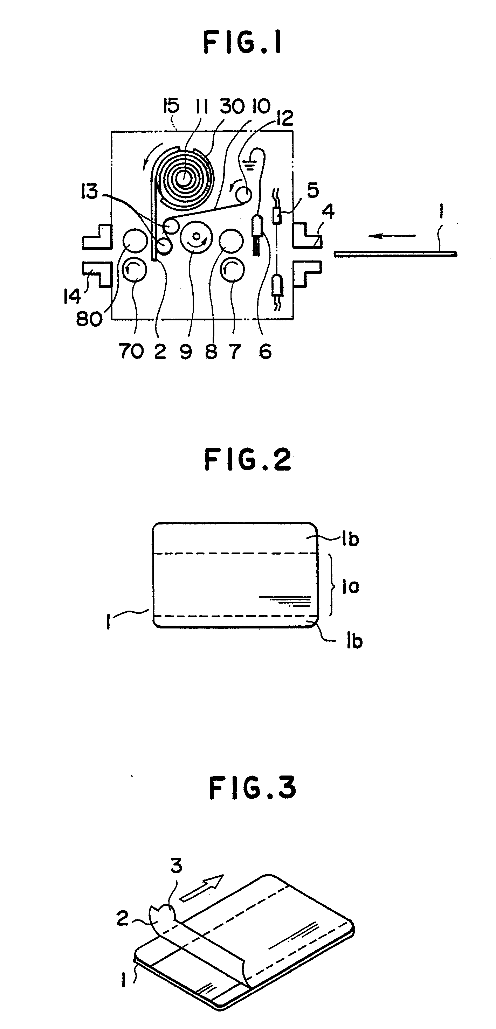

Fig. 2 is a schematic plane view of a representative optical recording medium for portable use.

The shape of the optical recording medium shown in Fig. 2 is rectangular (shaped in card), but this is not limitative of the present invention and it may be also circular (shaped in disc). 1a is the recording region, typically a region constituted of a heat-sensitive recording material. 1b is a non-recording region, where no recording and reading is effected.

Fig. 3 illustrates schematically the state where one surface of the optical recording medium is partially covered with a protective member 2. The optical recording medium 1 is carried and preserved under the state covered with the protective member 2, but the protective member 2 is peeled off and discarded during use.

The protective member 2 is provided with a projected portion 3 so that it can be peeled off easily by gripping with fingers.

Fig. shows schematically the constitution of the protective member covering device for optical recording member according to an example of the present invention.

15 is an outer case for the device, 4 is an inlet for inserting the optical recording medium 1, and 5 is a photosensor for detecting insertion of the recording medium 1. When insertion of the recording medium 1 is detected with the insertion detection means 5, the conveying roller 7 rotates to convey the recording medium 1. 6 is a brush which is the first cleaning means for removing dust, etc. attached on the recording medium surface. Brush 6 has also the function of eliminating static electricity. 7 is conveying roller for conveying the recording medium 1 and 8 is a press roller for the recording medium. By sandwitching the both sides of the recording medium with the conveying roller 7 and the press roller 8, the recording medium 1 is conveyed from the insertion portion to the cleaning means, from the cleaning means to the protective member covering means, successively.

As another constitutional example, the cleaning means and the protective member covering means may be conveyed with the recording medium remaining to be stationary. 9 is a cleaning roller which is the second cleaning means. This is provided for removing firm dust, oil, fingerprint, etc. which could not be removed by the brush, under rotation.

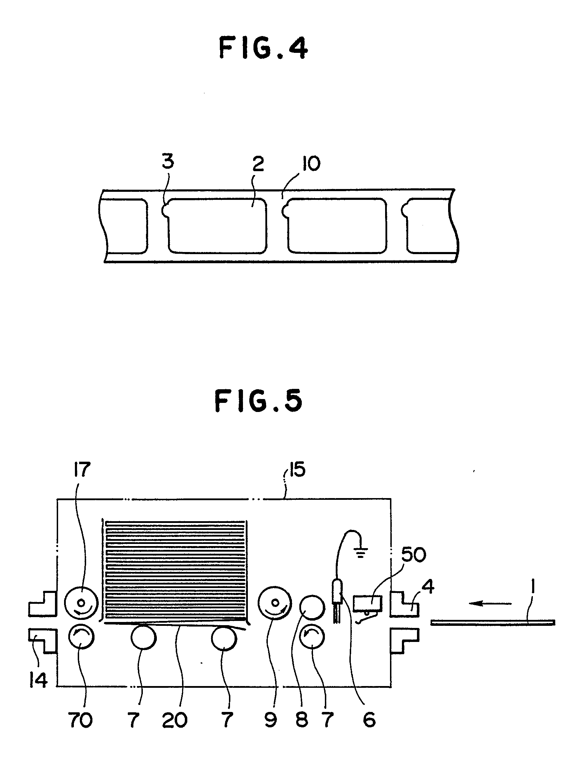

The shaft 11 is a shaft for winding up the protective member 2. The protective member is held on a substrate 10 shaped in tape as shown in Fig. 4 and wound up on the shaft 11. The protective member may be held on the tape-shaped substrate through, for example, tacky force. As the material suitable for the protective member, there may be included, for example, synthetic resin sheets with low tackiness such as polyethylene, etc., metal sheets such as aluminum, copper, etc., glass plate and paper.

These material sheets, when having tackiness by chemical treatment, heat treatment, etc., can be adhered and covered directly on the recording medium without intermediary tackifier. However, in the cases other than the above case, they are covered through an intermediary low tackifier.

The shaft 12 is a shaft which winds up the substrate 10 rotating in the same direction as the shaft 11. 13 is an idler roller and the substrate 10 is bent along the idler roller 13, but the protective member 2 is peeled off without bending.

This is because the firmness of the protective member overcomes the tacky force with the substrate 10.

Thus, for example, the protective member 2 which is a polyethylene sheet is peeled off from the substrate 10 and attached onto the surface of the recording medium 1 conveyed, and further passes through between the conveying roller 70 and the press roller 80, whereby the adhesion covering is completed. The extent of adhesion is such that the cover can be easily peeled off. Also, it is not necessarily required to be adhered to the whole surface of the recording medium, but it may be adhered only partially, for example, only to the peripheral portion of the recording medium. The recording medium 1 having completed adhesion covering with the protective member 2 is discharged from the discharging outlet 14. As another constitutional example, the insertion inlet 4 and the discharging outlet 14 can be also made the same.

In the above description, explanation about the electrical driving system was omitted, but driving can be conducted sequentially by a known control circuit system.

Fig. 5 illustrates schematically the constitution of the protective member covering device according to another example of the present invention.

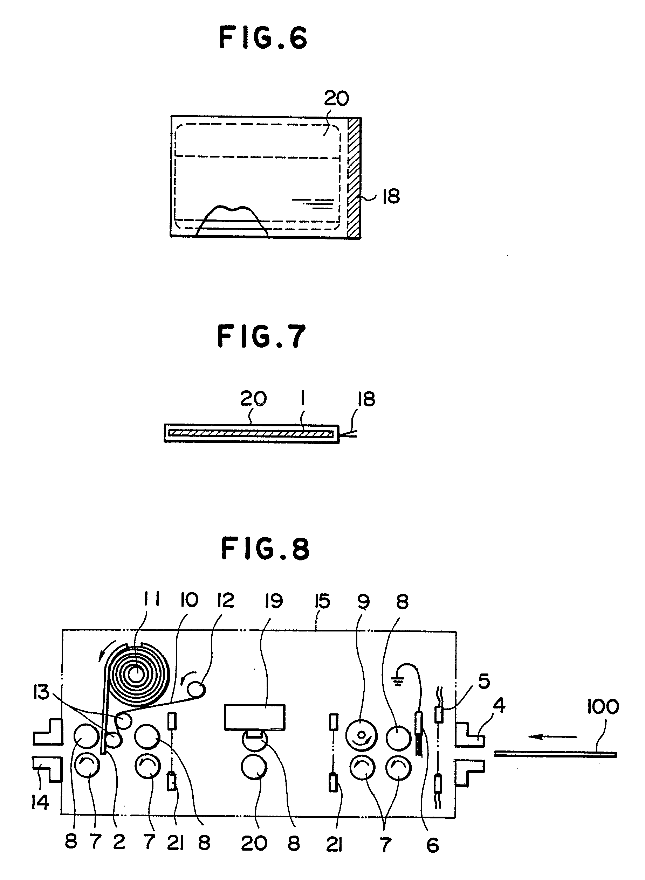

Fig. 6 shows a schematic plane view of the optical recording medium covered with the protective member by said device, and Fig. 7 its schematic side sectional view.

50 is a microswitch used as the insertion detecting means for the recording medium 1. 20 is a protective member folded in two, comprising, for example, a synthetic resin sheet. The recording medium 1, after wrapped in the protective member 20 folded in two, is hermetically sealed by, for example, the heating weld treatment, the chemical weld treatment, the mechanical bonding treatment, etc. The protective member 20 is housed in a considerable number of sheets superposed on one another as shown in Fig. 5. The recording medium inserted through the insertion inlet 4 is first detected by the microswitch 50 to emit a detection signal. The driving means (not shown) receiving said detection signal initiates rotation of the conveying roller 7. By this, the recording medium 1 is conveyed to the inner portion of the device 15, where it is first cleaned on its surface by the cleaning brush 6 and the cleaning roller 9, and then wrapped in the protective member 20 folded in two as shown in Fig. 5. The recording medium 1 is further conveyed after wrapped in the protective member 20 and, on reaching the heating roller 17, is hermetically sealed finally with the protective member. That is, the synthetic resin sheet used as the protective member 20 is heated by the heating roller 17 and, consequently, weld is effected between both surfaces of the synthetic resin sheet or between the synthetic resin sheet and the recording medium surface. As the means for hermetically sealing, heat weld is not limitative, but other method such as chemical weld, mechanical pressure bonding, etc. may be also available, provided that peel-off can be easily done. Also, in place of the protective member 20, a protective member shaped in a bag with opening in at least the progress direction of the recording medium may be employed.

Thus, the recording medium 1 after covered with the protective member 20 is discharged from the discharging outlet 14.

In carrying out welding or pressure bonding of the protective member 20, it is preferable to carry out the treatment so that the protruded portion 18 as the projected portion for peel-off of the protective member 20 may not be welded or pressure bonded. The protruded portion 18 is provided so that the protective member 20, which is required to be peeled off first in the case of performing recording or reading, may be readily peeled off by pulling with hand.

Fig. 8 illustrates the constitution of the optical information recording and reading device according to an example of the present invention.

The above optical information recording and reading device is constituted basically of an optical information recording and reading means, a cleaning means and a protective member covering means.

In the above constitution, first, the protective member 2 is peeled off from the optical card 100 used as the recording medium, and the optical card 100 is inserted through the insertion inlet 4. The optical card 100 inserted is detected by the photosensor 5, whereby the delivery roller 7 is initiated to be rotated to deliver the optical card 100 into the device.

The optical card 100 is cleaned with the static electricity eliminating brush 6 and the cleaning roller 9, and then conveyed to the position of a known optical information recording and reading means, where recording or reading of information is performed.

Of the known optical information recording and reading means, 19 is an optical head comprising an optical system for performing recording or reading. 20 is a delivery roller, 8 is a press roller, and recording or reading is performed while moving the optical card 100 reciprocatingly suitably in the information track direction (in this case, the longer direction of the card).

21 is a photosensor to be used as the reversal detection means which detects the optical card edge or other marks and reverses the movement for driving reciprocatingly the optical card 100.

In the optical card, information track is formed linearly, and such information track is arranged in a large number of lines in parallel at the predetermined region on the card surface. Accordingly, in the information recording and reading device using the optical card as the recording medium, optical beam spot is moved continuously relative to the direction of the information track on the optical card surface, thereby performing recording or reading of information, and after movement to a predetermined distance, the optical beam spot is moved to a predetermined distance relative to the direction transversing the above information track on the optical card surface, whereby no recording or reading of information is performed. Then, the above continuous movement relative to the direction of the information track is conducted, thereby performing recording or reading of information, and subsequently the relative movement to the direction of information track and the relative movement to the direction transversing said direction are similarly repeated alternately for a desired number of times.

The optical card 100 after completion of recording or reading is further conveyed and, by passing through the same steps as in the example described by referring to Fig. 1, is discharged from the discharging outlet 14 under the state covered with the protective member 2.

Thus, the protective member 2 covered with the optical card 100 by the above device can protect the optical card from dust, damage, temperature, humidity, etc. even during carrying of the optical card, until the next recording or reading.

The cleaning means is not limited to those shown in the examples, but other means such as the vacuum adsorption system, the wet cleaning, etc. may be used.

Also, the optical recording medium for portable use is not limited to the optical card as described above, but optical disc and other shapes may be available.

In the device of the present invention, it is also possible to add an automatic peeling means for the protective member immediately after the insertion inlet for the recording medium, if desired.

As is apparent from the above description, according to the present invention, since the cleaning means for the recording medium and the protective member covering means are constituted in one device as organically linked to each other, there is no such harm as goodness or badness of finishing, clumsiness, cumbersomeness, etc. as in the case of cleaning or covering by hand working, and also such harm as attachment of dust or fingerprint again on the recording medium before covering of the protective member in spite of cleaning can be removed. Thus, the protective member can be covered on a clean optical recording medium as such, whereby covering becomes substantially effective.

Also, according to the present invention, after performing recording or reading of information, the optical recording medium for portable use is cleaned automatically and subsequently covered with the protective member, and therefore labor and time can be saved, and also the protective member can be coated under the state of clean optical recording medium, whereby covering efficiency can be remarkably improved.

## Claims

1. A device for covering a protective member for an optical recording medium comprising:
a cleaning means which cleans at least one surface of an optical recording medium, and
a protective member covering means which covers a peelable protective member on at least one surface of the recording medium cleaned with the cleaning means.

2. A device for covering a protective member for an optical recording medium according to Claim 1, wherein the optical recording medium is in the form of a card.

3. A device for covering a protective member for an optical recording medium, wherein the protective member is a synthetic resin sheet.

4. A device for covering a protective member for an optical recording medium according to Claim 1, wherein the protective member is provided with a projected portion for peel-off.

5. A device for covering a protective member for an optical recording medium according to Claim 1, wherein the protective member before covering of the optical recording medium is held on a tape-shaped substrate.

6. A device for covering a protective member for an optical recording medium according to Claim 5, wherein the protective member is held through tacky force on the tape-shaped substrate.

7. A device for covering a protective member for an optical recording medium according to Claim 6, wherein the protective member covering means adheres the protective member to the whole surface of the optical recording member.

8. A device for covering a protective member for an optical recording medium according to Claim 6, wherein the protective member covering means adheres the protective member to a part of the surface of the optical recording member.

9. A device for covering a protective member for an optical recording medium according to Claim 6, wherein the protective member conveying means adheres the protective member to the peripheral portion of the optical recording member.

10. A device for covering a protective member for an optical recording medium according to Claim 1, wherein the protective member is a synthetic resin sheet folded in two.

11. A device for covering a protective member for an optical recording medium according to Claim 1, wherein the protective member is a synthetic resin sheet shaped in a bag having an opening in at least the progress direction of the optical recording medium.

12. A device for covering a protective member for an optical recording medium according to Claim 1, wherein the cleaning means has the function of eliminating static electricity.

13. A device for covering a protective member for an optical recording medium according to Claim 1, wherein the cleaning means is at least one selected from cleaning roller and cleaning brush.

14. A device for covering a protective member for an optical recording medium comprising:
a means for inserting and conveying an optical recording medium,
a cleaning means which cleans at least one surface of an optical recording medium,
a protective member covering means which covers a peelable protective member on at least one surface of the recording medium cleaned with the cleaning means, and
a means for discharging the optical recording medium covered with the protective member.

15. A device for covering a protective member for an optical recording medium according to Claim 14, wherein the optical recording medium is a card-shaped recording medium.

16. A device for covering a protective member for optical recording medium according to Claim 14, wherein the protective member is provided with a projected portion for peel-off.

17. A device for covering a protective member for an optical recording medium according to Claim 14, wherein the protective member means is one which covers the protective member held on a tape-shaped substrate on the optical recording medium.

18. A device for covering a protective member for an optical recording medium according to Claim 14, wherein the protective member covering means covers the protective member by adhesion to the peripheral portion of the optical recording medium.

19. A device for covering a protective member for an optical recording medium according to Claim 14, wherein the protective member is a synthetic resin sheet folded in two.

20. An optical information recording and reading device comprising:
a cleaning means for cleaning at least one surface of an optical recording medium,
an optical information recording and reading means which performs optically recording and reading of information, and
a protective member covering means which covers a peelable protective member on at least one surface of the recording medium cleaned with the cleaning means.

21. An optical information recording and reading device comprising:
a means for inserting and conveying an optical recording medium,
a cleaning means for cleaning at least one surface of an optical recording medium,
an optical information recording and reading means which performs optically recording and reading of information.
a protective member covering means which covers a peelable protective member on at least one surface of the recording medium cleaned with the cleaning means, and
a means for discharging the optical recording member covered with the protective member.

22. An optical information recording and reading device according to Claim 20, wherein the optical recording medium is a card-shaped recording medium.

23. An optical information recording and reading device according to Claim 20, wherein the protective member is provided with a projected portion for peel-off.

24. An optical information recording and reading device according to Claim 20, wherein the protective member covering means is one which covers the protective member held on a tape-shaped substrate on the optical recording medium.

25. An optical information recording and reading device according to Claim 20, wherein the protective member covering means covers the protective member by adhesion to the peripheral portion of the optical recording medium.

26. An optical information recording and reading device according to Claim 20, wherein the protective member is a synthetic resin sheet folded in two.

27. An optical information recording and reading device according to Claim 21, wherein the optical recording medium is a chard-shaped recording medium.

28. An optical information recording and reading device according to Claim 21, wherein the protective member is provided with a projected portion for peel-off.

29. An optical information recording and reading device according to Claim 21, wherein the protective member covering means is one which covers the protective member held on a tape-shaped substrate on the optical recording medium.

30. An optical information recording and reading device according to Claim 21, wherein the protective member covering means covers the protective member by adhesion to the peripheral portion of the optical recording medium.

31. An optical information recording and reading device according to Claim 21, wherein the protective member is a synthetic resin sheet folded in two.

32. An optical recording medium which is an optical recording medium covered with a peelable protective member, characterized in that said protective member is provided with a projected portion for peel-off which is projected

11 0 262 973 12

from the optical recording member.

0262973

# FIG.1

# FIG.2

# FIG.3

0262973

# FIG.4

# FIG.5

0262973

# FIG.6

# FIG.7

# FIG.8